# EUROPEAN PATENT APPLICATION

(11) **EP 2 978 172 A1**
(43) Date of publication of application: **27.01.2016**
(21) Application number: 14768352.8
(22) Date of filing: 20.03.2014
(51) Int. Cl.: H04L 12/70, H04L 12/46, H04L 12/717

(54) **NETWORK STATISTICAL INFORMATION PROVIDING SYSTEM, NETWORK STATISTICAL INFORMATION PROVIDING METHOD, AND PROGRAM**

(30) Priority: 22.03.2013 JP 2013060710
(71) Applicant: NEC Corporation, Tokyo 108-8001 (JP)
(72) Inventor: MORIMOTO, Masaharu, Tokyo 108-8001 (JP)
(74) Representative: Vossius & Partner Patentanwälte Rechtsanwälte mbB
(86) International application number: PCT/JP2014/057826
(87) International publication number: WO 2014/148613

(57) **Abstract**

Contributing to facilitating integrated network failure analysis. A network statistical information providing system comprises: a domain boundary management unit that manages link information between a first domain configured to include a device capable of acquiring statistical information having a predetermined granularity and a second domain that does not include a device capable of acquiring statistical information having the predetermined granularity; and a statistical information conversion unit that classifies statistical information acquired from the first domain into statistical information that does not belong to a domain boundary and statistical information that belongs to the domain boundary using the link information, performs predetermined processing on the statistical information that belongs to the domain boundary, and provides the processed statistical information as statistical information straddling a plurality of domains.

## Description

### TECHNICAL FIELD

### (Reference to Related Application)

The present invention is based upon Japanese patent application No. 2013-060710 filed on March 22nd, 2013, the disclosure of which is incorporated herein in its entirety by reference thereto. The present invention relates to a network statistical information providing system, network statistical information providing method, and program, and particularly to a network statistical information providing system, network statistical information providing method, and program providing network statistical information obtained from different types of networks.

### BACKGROUND

Non-Patent Literature 1 discloses a network called OpenFlow. An OpenFlow switch, defined in Non-Patent Literature 2, comprises a secure channel for communicating with an OpenFlow controller, and operates according to a flow table, an addition to or rewriting of which is suitably instructed by the OpenFlow controller. In the flow table, a set of matching rules (Match Fields) to be matched against a packet header, flow statistics (Counters), and Instructions defining the processing contents is defined for each flow (refer to "5.2 Flow Table" in Non-Patent Literature 2).

Further, the OpenFlow controller is able to obtain statistical information having various granularities such as for each flow or flow table by asking the OpenFlow switch for the flow statistics (Counters).

Meanwhile, as centralized control type networks described above become popular, they are more likely to be connected to autonomous distributed networks constituted by layer 2 switches or layer 3 switches. These network apparatuses are capable of acquiring a transmitted/received packet (referred to as "packet" hereinafter without distinguishing "packet" from "frame") for each port, but generally do not have a function of acquiring statistical information with a relatively flexible granularity such as flow.

Patent Literature 1 discloses a traffic monitoring system capable of monitoring traffic to any communication terminal in an autonomous distributed network described above. More concretely, in the traffic monitoring system, a first network device accommodating a communication terminal monitors whether or not the amount of traffic flow to the communication terminal exceeds a first alarm threshold value. Further, in this traffic monitoring system, a second network device provided on a network boundary monitors whether or not the amount of traffic flow to the communication terminal exceeds a second alarm threshold value. Then, this traffic monitoring system determines whether or not the traffic to the communication terminal becomes excessive based on the monitoring results.

Further, Patent Literature 2 discloses a network information presenting apparatus that visualizes traffic flowing from an external source into a managed network and transmitted to an external destination and that presents the visualized traffic to a user. More concretely, the network information presenting apparatus is described to comprise traffic acquiring means for acquiring traffic information collected from at least one router provided on a boundary of the managed network and specified by an instruction from a user, route acquiring means for acquiring the information of a route from a starting-point router from which the traffic flows into the managed network to an end-point router from which the traffic is transmitted by the managed network based on information about a route inside the managed network, control means for performing at least one of the following: designation of the traffic or identification of the end-point router based on information about a route outside the managed network, and presenting means for associating the route information acquired by the route acquiring means with the traffic information acquired by the traffic acquiring means and presenting the results to a user.

### CITATION LIST

### PATENT LITERATURE

Patent Literature 1:
   Japanese Patent Kokai Publication No. JP2012-74867A
Patent Literature 2:
   Japanese Patent Kokai Publication No. JP2010-124512A

### NON-PATENT LITERATURE

Non-Patent Literature 1:
   Nick McKeown, et al. "OpenFlow: Enabling Innovation in Campus Networks," [online], [Searched on January, 9th 2013], the Internet <URL: http://www.openflow.org/documents/openflow-wp-latest.pdf>.
Non-Patent Literature 2:
   "OpenFlow Switch Specification" Version 1.3.1. (Wire Protocol 0x04)," [online], [Searched on January 9th, 2013], the Internet <URL:http://www.opennetworking.org/images/stories/downloads/specif ication/openflow-spec-v1.3.1.pdf>.

### SUMMARY

### TECHNICAL PROBLEM

The following analysis is given by the present invention. In a network to which networks providing different types of statistical information having different granularities as described above (referred to as "integrated network" hereinafter), there is a problem that statistical information spanning two networks and having a uniform granularity cannot be acquired.

For instance, an OpenFlow controller can comprise a station statistics function of counting the number of transmitted/received frames for each MAC (Media Access Control) address connected to ports of a switch based on information acquired from the switch described above and a data flow statistics function of counting the number of transmitted/received frames between a switch through which end-to-end communication between terminals (MAD addresses) is performed and the flow thereof.

On the other hand, a typical autonomous distributed network described above can only provide statistical information for each port and cannot provide the station statistics or data flow statistics that can be acquired from the OpenFlow controller.

In this case, information having a fine granularity is often rolled into information having a coarse granularity. For instance, since statistical information for each port can be acquired from an autonomous distributed type network apparatus, data flow statistics acquired from a centralized control network are put together with the statistical information for each port and the value thereof is presented.

As a result, useful statistical information having a small granularity is lost, making it difficult to, for instance, analyze a failure of the entire integrated network.

It is an object of the present invention to provide a network statistical information providing system, network statistical information providing method, and program capable of contributing to facilitating integrated network failure analysis.

### SOLUTION TO PROBLEM

According to a first aspect, there is provided a network statistical information providing system, comprising: a domain boundary management unit that manages link information between a first domain configured to include a device capable of acquiring statistical information having a predetermined granularity and a second domain that does not include a device capable of acquiring statistical information having the predetermined granularity. Further, the network statistical information providing system comprises a statistical information conversion unit that classifies statistical information acquired from the first domain into statistical information that does not belong to a domain boundary and statistical information that belongs to the domain boundary using the link information, performs predetermined processing on the statistical information that belongs to the domain boundary, and provides the processed statistical information as statistical information straddling a plurality of domains.

According to a second aspect, there is provided a network statistical information providing method performed by a computer that comprises a domain boundary management unit that manages link information between a first domain configured to include a device capable of acquiring statistical information having a predetermined granularity and a second domain that does not include a device capable of acquiring statistical information having the predetermined granularity. The network statistical information providing method comprises, by the computer, classifying statistical information acquired from the first domain into statistical information that does not belong to a domain boundary and statistical information that belongs to the domain boundary using the link information. Further, the network statistical information providing method comprises, by the computer, performing predetermined processing on the statistical information that belongs to a domain boundary and providing the processed statistical information as statistical information straddling a plurality of domains. The present method is tied to a particular machine, which is a computer that processes statistical information acquired from the first domain and provides the result to a user.

According to a third aspect, there is provided a program for a computer that comprises a domain boundary management unit that manages link information between a first domain configured to include a device capable of acquiring statistical information having a predetermined granularity and a second domain that does not include a device capable of acquiring statistical information having the predetermined granularity. The program causes the computer to execute classifying statistical information acquired from the first domain into statistical information that does not belong to a domain boundary and statistical information that belongs to the domain boundary using the link information. Further the program causes the computer to execute performing predetermined processing on the statistical information that belongs to a domain boundary and providing the processed statistical information as statistical information straddling a plurality of domains. Further, this program can be stored in a computer-readable (non-transient) storage medium. In other words, the present invention can be realized as a computer program product.

### ADVANTAGEOUS EFFECTS OF INVENTION

According to the present invention, it becomes possible to contribute to facilitating integrated network failure analysis.

### BRIEF DESCRIPTION OF DRAWINGS

Fig. 1 is a drawing showing the configuration of an exemplary embodiment of the present invention.
Fig. 2 is a drawing showing the configuration of another exemplary embodiment of the present invention.
Fig. 3 is a drawing showing a system configuration of a first exemplary embodiment of the present invention.
Fig. 4 is a drawing showing information held by a domain management unit of the first exemplary embodiment of the present invention.
Fig. 5 is a drawing showing information held by a domain boundary management unit of the first exemplary embodiment of the present invention.
Fig. 6 is a drawing showing an example of station statistical information provided by an OpenFlow controller of the first exemplary embodiment of the present invention to an integrated controller.
Fig. 7 is a drawing showing an example of a MAC address table provided by a Legacy controller of the first exemplary embodiment of the present invention to the integrated controller.
Fig. 8 is a sequence diagram showing the operation of the first exemplary embodiment of the present invention.
Fig. 9 is a flowchart showing the operation of a statistical information conversion unit of the first exemplary embodiment of the present invention.
Fig. 10 is a drawing showing a state in which classification symbols (1) and (2) are given to the station statistical information in Fig. 6.
Fig. 11 is a drawing in which symbols (3) are given to entries in the MAC address table in Fig. 7 having a MAC address of ports on the terminal side.
Fig. 12 is a drawing showing an example of an integrated station statistics table (first table) generated by the statistical information conversion unit of the first exemplary embodiment of the present invention.
Fig. 13 is a drawing showing an example of a table (second table) obtained by converting the station statistical information belonging to a domain boundary and generated by the statistical information conversion unit of the first exemplary embodiment of the present invention.
Fig. 14 is a drawing showing a mode of statistical information provided by a statistical information conversion unit of a second exemplary embodiment of the present invention.

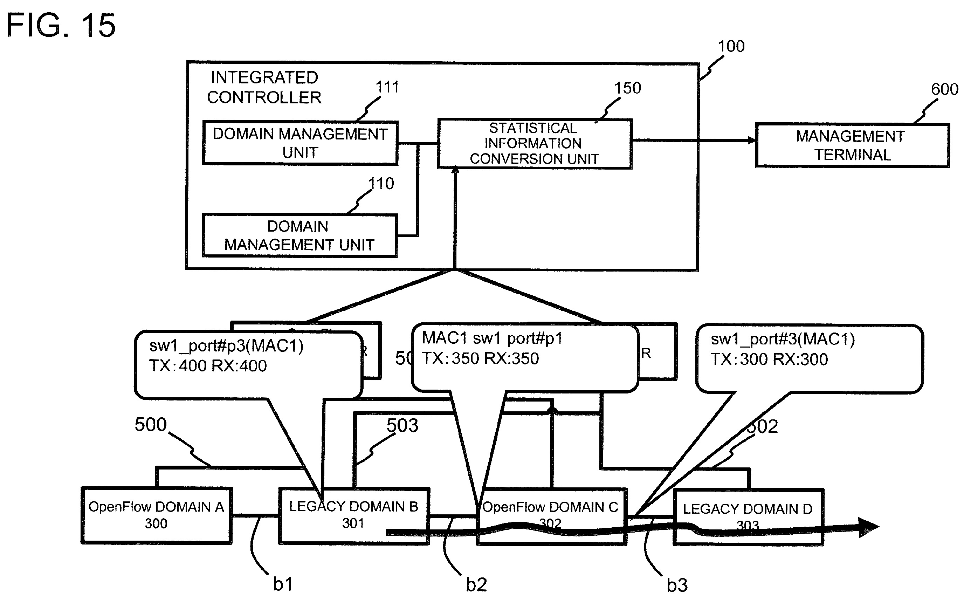

Fig. 15 is a drawing showing a mode of statistical information provided by a statistical information conversion unit of a third exemplary embodiment of the present invention.

### DESCRIPTION OF EMBODIMENTS

First, a summary of an exemplary embodiment will be given with reference to the drawings. Note that drawing reference signs in the summary are given to each element as an example solely to facilitate understanding for convenience and are not intended to limit the present invention to the modes shown in the drawings.

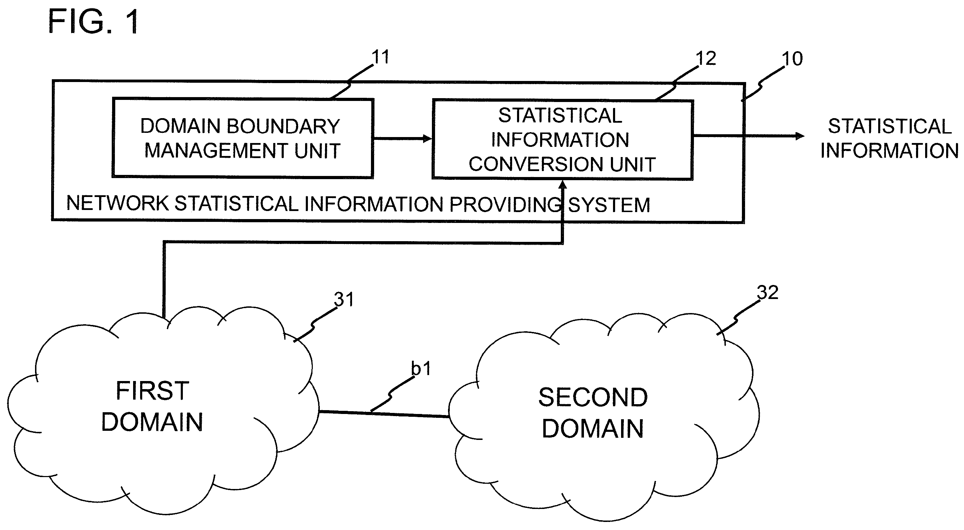

The present invention in an exemplary embodiment thereof can be realized by a network statistical information providing system that includes a domain boundary management unit 11 and a statistical information conversion unit 12 as shown in Fig. 1. The domain boundary management unit 11 manages link information between a first domain 31 configured to include a device capable of acquiring statistical information having a predetermined granularity and a second domain 32 that does not include a device capable of acquiring statistical information having the predetermined granularity.

Here, a "domain" denotes a group of switches reachable via a network and capable of acquiring the same type of statistical information having the same granularity out of a switch group managed by one or a plurality of control apparatuses. Further, a "domain boundary" is a boundary between two domains, and it is expressed by link information such as a connection between a port of a switch in the first domain 31 and a port of a switch in the second domain 32, for instance.

The statistical information conversion unit 12 classifies statistical information acquired from the first domain 31 into statistical information that does not belong to a domain boundary and statistical information that belongs to a domain boundary using the link information acquired from the domain boundary management unit 11, performs predetermined processing on the statistical information that belongs to a domain boundary, and provides the processed statistical information as statistical information straddling a plurality of domains.

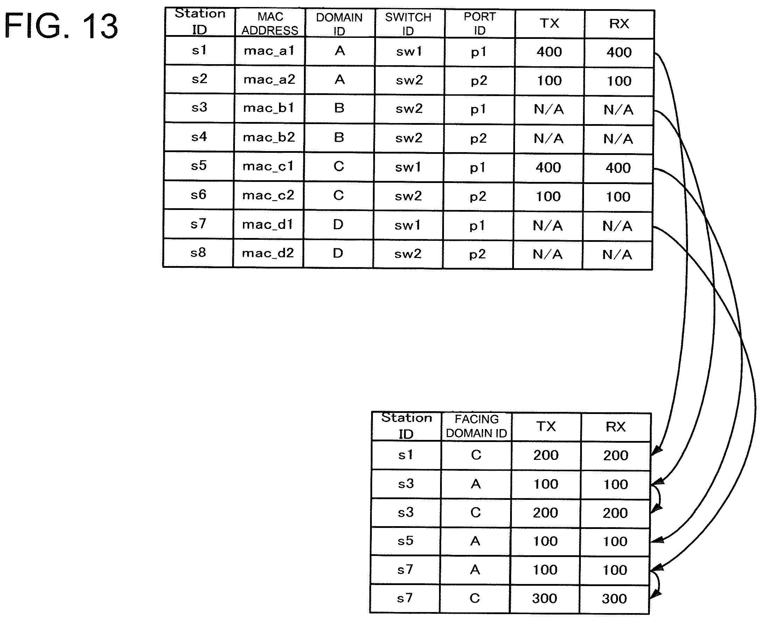

More concretely, for instance, when station statistical information has been acquired from the first domain 31, the statistical information conversion unit 12 classifies the station statistical information acquired from the first domain 31 into the statistical information of a station that does not belong to a domain boundary b1 between the first domain 31 and the second domain 32, and the statistical information of a station that belongs to the domain boundary b1. Then, the statistical information conversion unit 12 processes the statistical information of the station belonging to the domain boundary b1, converts it into statistical information between the station belonging to the domain boundary b1 in the first domain 31 and the second domain 32, and presents the results (refer to Fig. 13).

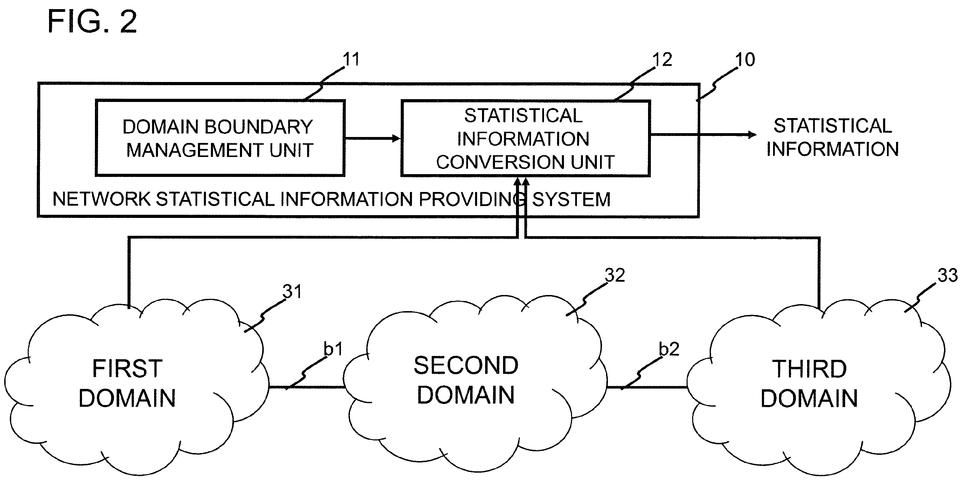

Further, as shown in Fig. 2, when the first domain 31 and a third domain 33 capable of acquiring statistical information having a predetermined granularity are connected via the second domain 32 and the statistical information conversion unit 12 is able to acquire statistical information having the same key from the first domain 31 and the third domain 33, the statistical information conversion unit 12 can present the information of a domain as information related to another domain by combining these pieces of statistical information. For instance, in a case where the third domain 33 is reachable from the first domain 31 via the second domain 32 in the aforementioned station statistical information, when a station having the same MAC address as a piece of station statistical information of the first domain 31 can be acquired from station statistical information of the third domain 33 and the station belongs to a domain boundary b2 between the second domain 32 and the third domain 33, the statistical information conversion unit 12 is able to derive the number of packets transmitted and received between the first domain 31 and the third domain 33 out of the number of transmitted/received packets in the piece of station statistical information of the first domain 31. Further, the number of packets transmitted/received between the first domain 31 and the second domain 32 can be derived by subtracting the number of packets transmitted/received between the second domain 32 and the third domain 33 from the number of packets transmitted/received between the first domain 31 and the second domain 32.

The statistical information acquired as described above serves as a useful clue, for instance, to chase a transmitted/received packet of a station in the first domain and can be utilized for failure analysis.

### [Exemplary Embodiment 1]

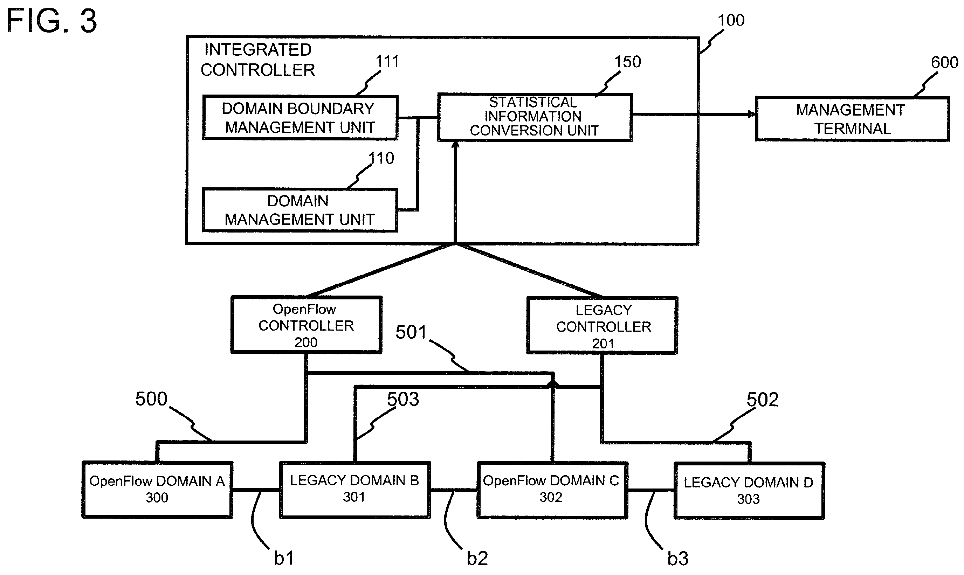

Next, a first exemplary embodiment of the present invention will be described in detail with reference to the drawings. Fig. 3 is a drawing showing a system configuration of the first exemplary embodiment of the present invention. Fig. 3 shows a configuration in which an OpenFlow controller 200 that controls an OpenFlow domain A and an OpenFlow domain C, a Legacy controller 201 that manages a Legacy domain B and a Legacy Domain D, and an integrated controller 100 that controls the OpenFlow controller 200 and the Legacy controller 201 are connected.

Control channels 500 to 503 connect between the OpenFlow controller 200 and the OpenFlow domain A, the OpenFlow controller 200 and the OpenFlow domain C, the Legacy controller 201 and the Legacy domain D, and the Legacy controller 201 and the Legacy domain B, respectively. In Fig. 3, a single line represents each of the control channels 500 to 503, however, in reality the control channels 500 to 503 connect each switch included in each domain and the OpenFlow controller 200 and the Legacy controller 201.

Further, in the example of Fig. 3, the OpenFlow domain A and the Legacy domain B are connected by the domain boundary b1. Similarly, the Legacy domain B and the OpenFlow domain C are connected by the domain boundary b2, and the OpenFlow domain C and the Legacy domain D are connected by the domain boundary b3.

The integrated controller 100 comprises a domain management unit 110, a domain boundary management unit 111, and a statistical information conversion unit 150.

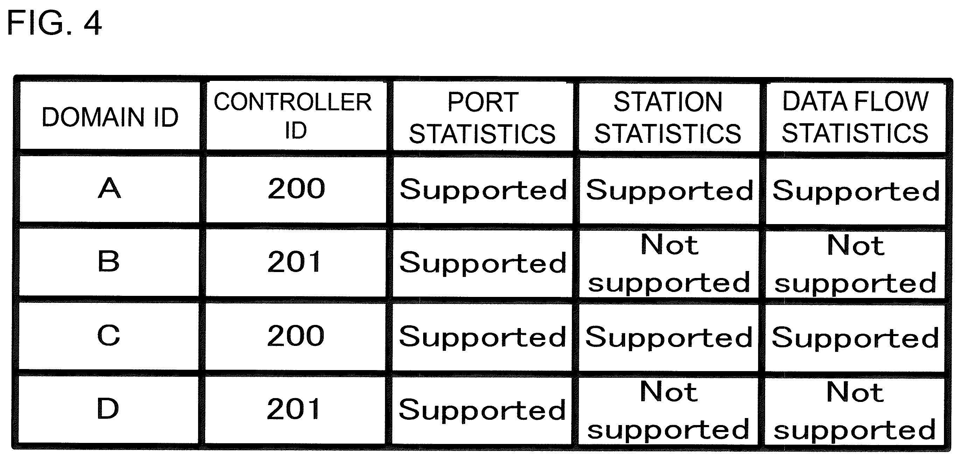

The domain management unit 110 manages the controllers that control each domain and domain information such as what kind of statistical information are supported. Fig. 4 is an example of a table for managing domain information held by the domain management unit 110. In the example of Fig. 4, domains A and C are controlled by the OpenFlow controller 200, and port statistics, station statistics, and data flow statistics are supported. Domains B and D are managed by the Legacy controller 201, and only port statistics are supported while station statistics and data flow statistics are not.

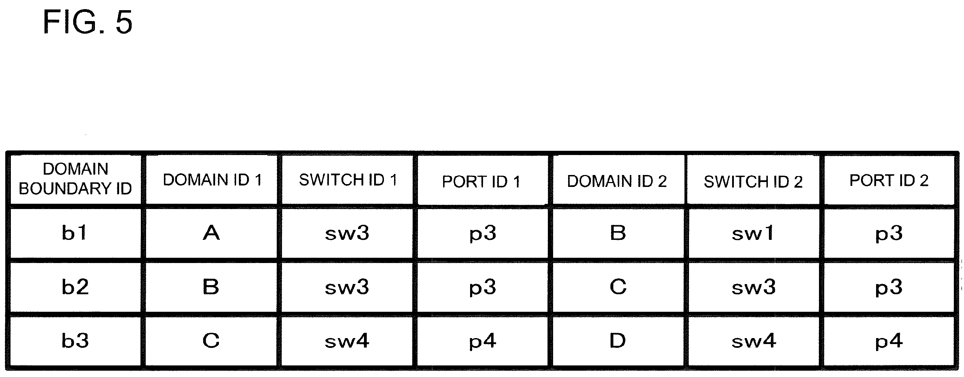

The domain boundary management unit 111 manages the information of a link, which is a boundary between two domains. Fig. 5 is an example of a table for managing domain boundary information held by the domain boundary management unit 111. The example in Fig. 5 shows a table in which the domain IDs of both ends of each domain boundary, switch ID, and port ID are managed and associated with each other. For instance, from the table in Fig. 5, one can tell that the domain boundary b1 is constituted by a link between a port #p3 of a switch (sw3) in the domain A and a port #p3 of a switch (sw1) in the domain B.

Note that a user may enter the data set in the domain management unit 110 and the domain boundary management unit 111 in advance. Further, the data may be automatically registered based on information acquired from the domains controlled or managed by the integrated controller 100, the OpenFlow controller 200, or the Legacy controller 201.

The statistical information conversion unit 150 performs predetermined processing on statistical information having a different granularity for each domain, coverts it into statistical information straddling a plurality of domains, and outputs the result to a management terminal 600. The operation of the statistical information conversion unit 150 will be described in detail using a concrete example later.

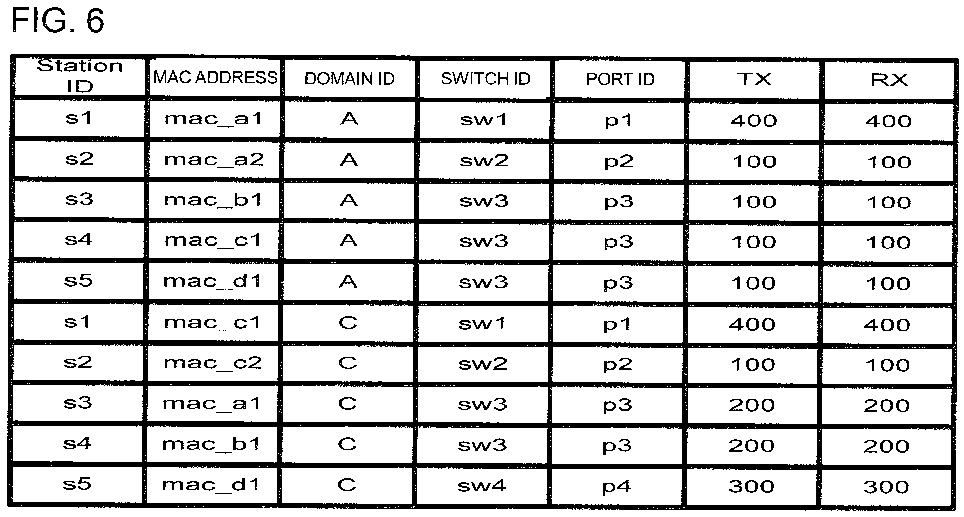

The OpenFlow controller 200 is a control apparatus that controls switches (OpenFlow switches) disposed on the domains A and C based on a control policy set by the integrated controller 100 (refer to Non-Patent Literatures 1 and 2). Further, the OpenFlow controller 200 provides the integrated controller 100 with station statistical information. Fig. 6 is a drawing showing an example of station statistical information provided by the OpenFlow controller 200 in the present exemplary embodiment to the integrated controller 100. As shown in Fig. 6, the station statistical information associates the number of transmitted packets (TX) with the number of received packets (RX) for each MAC address of a terminal connected to a port of a switch in a domain.

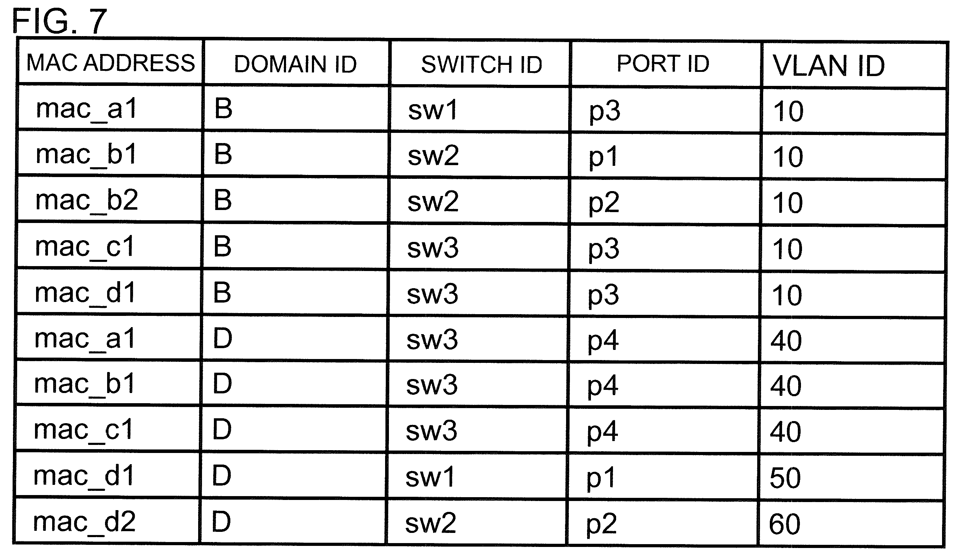

The Legacy controller 201 manages layer 2 switches disposed in the domains B and D. Further, the Legacy controller 201 provides MAC address tables held by switches located on the edges of the domains B and D to the integrated controller 100. Fig. 7 is a drawing showing an example of the MAC address table information provided by the Legacy controller 201 of the present exemplary embodiment to the integrated controller 100. The example of Fig. 7 shows a MAC address table in which a MAC address table of the edge switches in the domain B and a MAC address table of the edge switches in the domain D are merged. For instance, when receiving a packet having a MAC address of mac_a1, the edge switch sw1 in the domain B outputs it from the port #p3.

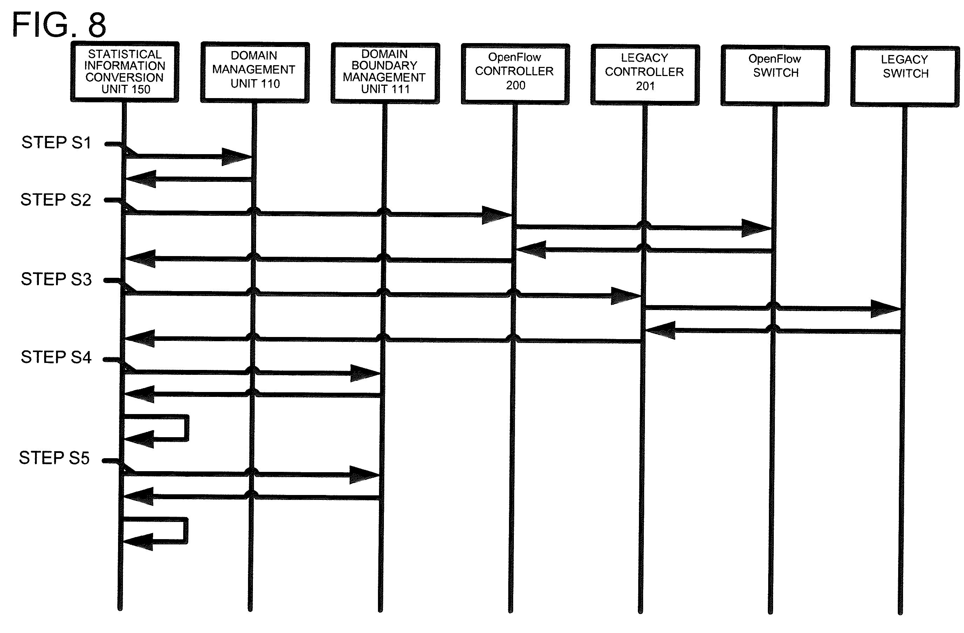

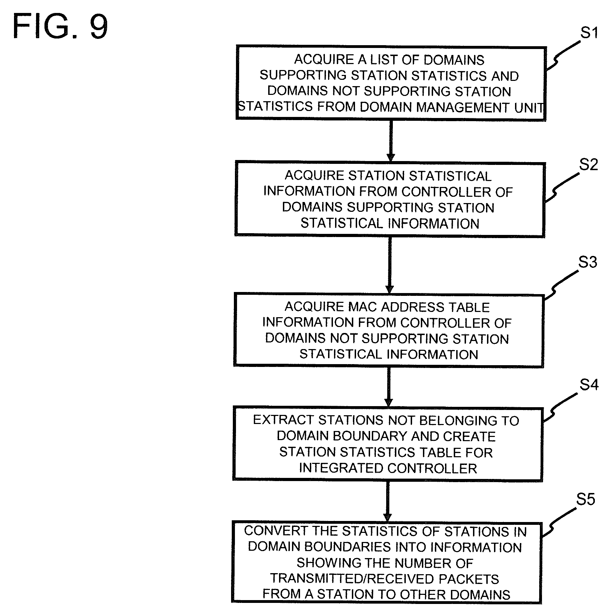

Next, the operation of the present exemplary embodiment will be described in detail with reference to Figs. 8 and 9. Fig. 8 is a sequence diagram showing the operation of the first exemplary embodiment of the present invention. Fig. 9 is a flowchart showing the operation of the statistical information conversion unit 150 shown in Fig. 8. First, the statistical information conversion unit 150 of the integrated controller 100 searches the management table in the domain management unit 110 and acquires the information of the domains to be controlled (step S1 in Figs. 8 and 9).

Next, the statistical information conversion unit 150 acquires station statistical information about the domains A and C that support station statistical information from the OpenFlow controller 200 for each domain (step S2 in Figs. 8 and 9). Here, it is assumed that the statistical information conversion unit 150 is able to acquire the station statistical information shown in Fig. 6 by having the OpenFlow controller 200 make an inquiry to the OpenFlow switches under the control thereof.

Next, regarding the domains B and D that do not support station statistical information, the statistical information conversion unit 150 acquires the MAC address table information of the edge switches in each domain from the Legacy controller 201 for each domain (step S3 in Figs. 8 and 9). Here, it is assumed that the statistical information conversion unit 150 is able to acquire the MAC address table information shown in Fig. 7 by having the Legacy controller 201 make an inquiry to the Legacy switches under the control thereof

Next, the statistical information conversion unit 150 classifies the entries of the station statistical information in Fig. 6 into entries (1) of stations not belonging to a domain boundary and entries of stations belonging to a domain boundary (2). Whether or not a station belongs to a domain boundary can be determined by confirming whether or not each station is connected to a domain boundary in Fig. 5.

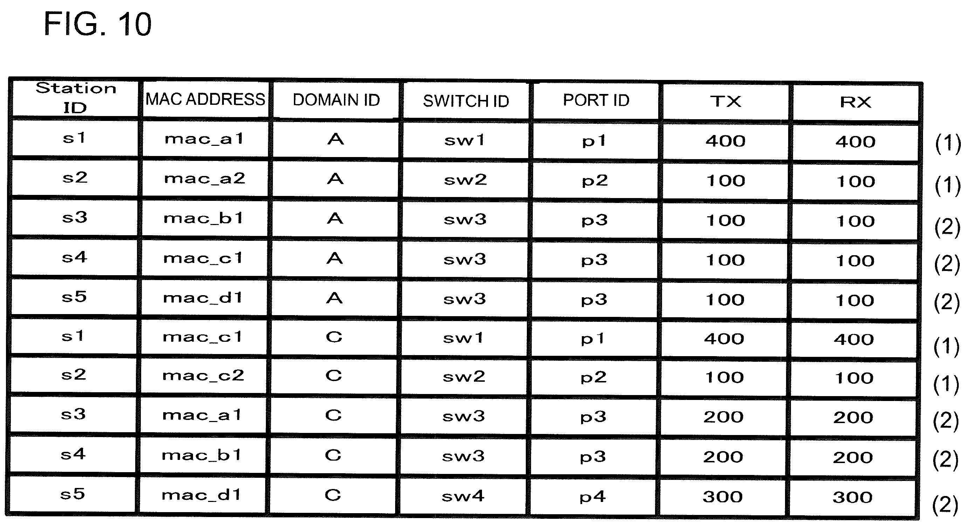

Fig. 10 is a drawing showing a state in which symbols (1) and (2) indicating whether or not a station belongs to a domain boundary are given to the station statistical information in Fig. 6. For instance, a station having a station ID of s1 in Fig. 10 is connected to a port p1 of a switch sw1 in the domain A. Since this combination of the switch and the port is not registered in the domain boundary management table shown in Fig. 5, the station having the station ID of s1 is determined not to belong to any domain boundary. Further, for instance, a station having a station ID of s3 in Fig. 10 is connected to the port p3 of the switch sw3 in the domain A. Since this combination of the switch and the port is registered in the domain boundary management table shown in Fig. 5, the station having the station ID of s3 is determined to belong to a domain boundary.

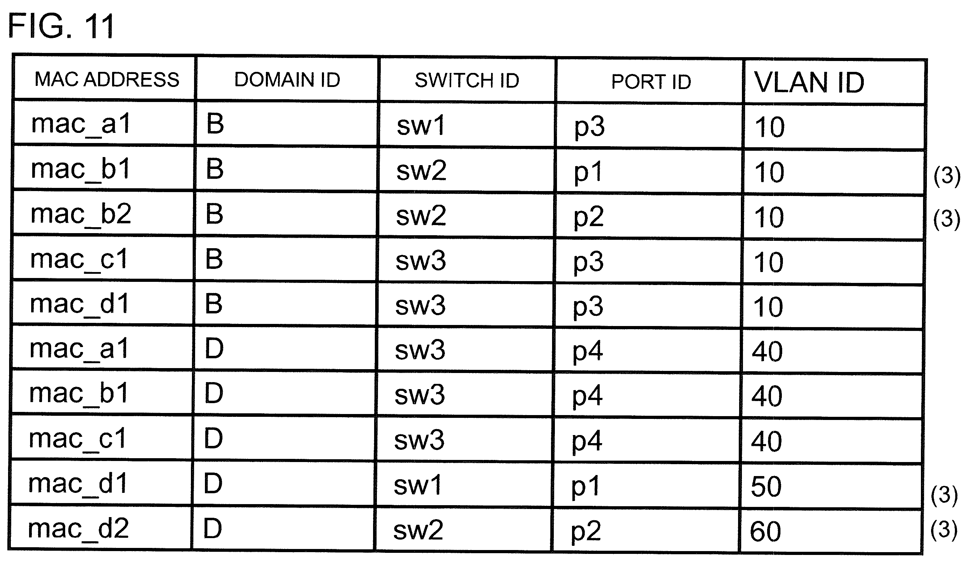

Further, the statistical information conversion unit 150 extracts stations in the domains B and D by extracting MAC addresses belonging to ports on the terminal side from the MAC learning table in Fig. 7. Note that the Legacy controller 201 that manages the domains B and D can provide information as to whether or not a MAC address belongs to a port on the terminal side. Fig. 11 is a drawing showing a state in which symbols (3) are given to entries in the MAC learning table in Fig. 7 having a MAC address belonging to a port on the terminal side.

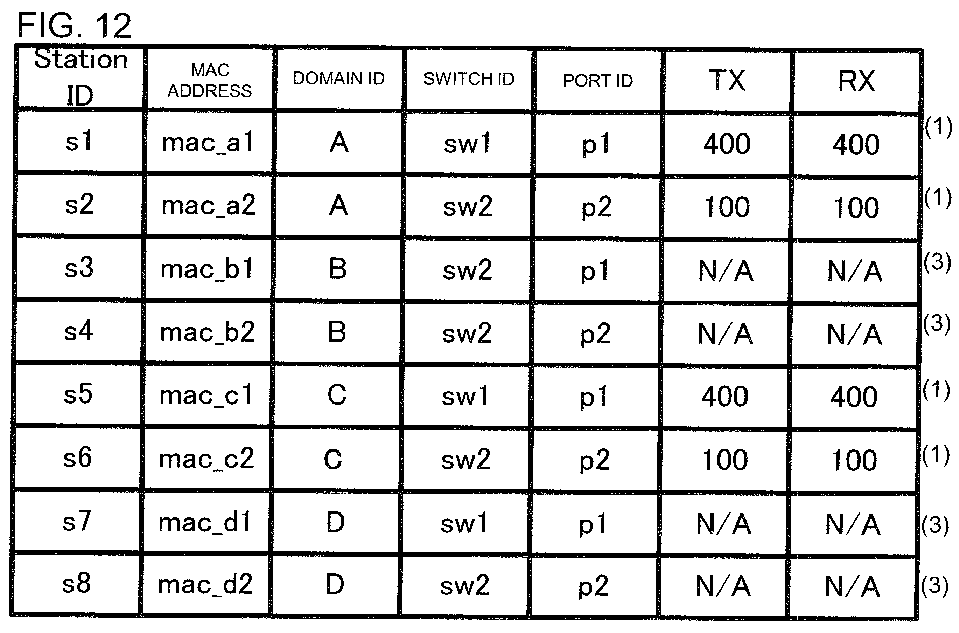

Next, the statistical information conversion unit 150 takes the union of the entries with the symbol (1) in Fig. 10 and the entries with the symbol (3) in Fig. 11 and creates an integrated station statistics table for the integrated controller (corresponding to a first table) (step S4 in Figs. 8 and 9). Fig. 12 is an example of the integrated station statistics table for the integrated controller generated in the step S4. In the example of Fig. 12, re-numbered station IDs are given to all the stations. Further, since TX and RX values were not acquired in the first place, n/a is set for the entries determined to have a MAC address belonging to a port on the terminal side from the MAC learning table in Fig. 7.

Next, the statistical information conversion unit 150 processes the statistical information of the stations in domain boundaries with the symbol (2) in Fig. 10. First, the statistical information conversion unit 150 extracts entries having the same MAC addresses as those of the stations with the symbol (2) determined to be in domain boundaries in Fig. 10 from the entries in the integrated station statistics table in Fig. 12. Then, the statistical information conversion unit 150 takes out entries having the same MAC addresses from the entries with the symbol (2) in Fig. 10, and puts these entries together in a table showing the number of transmitted/received packets from a station to other domains (corresponding to a second table) (step S5 in Figs. 8 and 9).

Fig. 13 is a drawing for explaining how the statistical information conversion unit 150 processes the statistical information of the stations in domain boundaries with the symbol (2) in Fig. 10. The top table in Fig. 13 is the integrated station statistics table in Fig. 12. For instance, a station having the MAC address of mac_a1 in the top row in the top table in Fig. 13 has the same MAC address as a station connected to a port #p3 of a switch sw3 and belonging to a domain boundary of the domain C in the third row from the bottom in Fig. 10. This indicates that packets transmitted/received by stations having the MAC address of mac_a1 reach the switch in the domain C via the domain B and appear in the station statistics. Therefore, the statistical information conversion unit 150 takes out the entry (in the third row from the bottom) in Fig. 10 and generates an entry having the domain C as a facing domain, 200 as TX, and 200 as RX, as shown in the bottom table in Fig. 13.

On the other hand, a station having a MAC address of mac_a2 in the second row from the top in the top table in Fig. 13 does not appear as a station in a domain boundary with the symbol (2) in Fig. 10. This indicates that packets transmitted/received by the station having the MAC address of mac_a2 do not reach a switch in the domain C via the domain B. Therefore, the statistical information conversion unit 150 does not create an entry for the station having the MAC address of mac_a2.

Further, a station having a MAC address of mac_b1 in the third row from the top in the top table in Fig. 13 has the same MAC address as a station connected to the port #p3 of the switch sw3 and belonging to a domain boundary of the domain A in the third row from the top in Fig. 10. Further, the station having the MAC address of mac_b1 has the same MAC address as a station connected to the port #p3 of the switch sw3 and belonging to a domain boundary of the domain C in the second row from the bottom in Fig. 10. These facts indicate that packets transmitted/received by the station having the MAC address of mac_b2 reach the switches in the domain A and C and appear in the station statistics. Therefore, the statistical information conversion unit 150 takes out the corresponding entries (from the third row from the top and the second row from the bottom) in Fig. 10 and generates an entry having the domain A as a facing domain, 100 as TX, and 100 as RX, and an entry having the domain C as a facing domain, 200 as TX, and 200 as RX, as shown in the bottom table in Fig. 13.

As described, the information that the number of packets transmitted/received by the station having the MAC address of mac_a1 in the domain A is 400 and that, out of these, the number of packets transmitted/received from/to the domain C is 200 can be provided as shown in Fig. 13.

### [Exemplary Embodiment 2]

Next, a second exemplary embodiment configured identically to the first exemplary embodiment and capable of converting data flow statistics will be described. Since the basic configuration is the same as the first exemplary embodiment, the differences therebetween will be mainly described.

Data flow statistics are statistical information showing information of a switch and a port that an end-to-end flow (referred to as "data flow" hereinafter) from a station (with "MAC address 1 ") to another station (with "MAC address 2") goes through and the number of packets transmitted by the flow.

First, the statistical information conversion unit 150 of the integrated controller 100 in Fig. 3 acquires data flow statistics obtained from the domains A and C via the OpenFlow controller 200 and performs the following processing on each data flow.
(2-1) The statistical information conversion unit 150 identifies the domains to which the source station and the destination station of each data flow belong. For instance, the statistical information conversion unit 150 identifies that the source station belongs to the domain A and the destination station belongs to the domain D in Fig. 3. This process can be achieved by identifying the domain to which a MAC address appearing in the data flow statistics acquired from the domains A and C belongs, as in the steps S1 to S3 in the first exemplary embodiment.
(2-2) For each domain that a data flow goes through, a set of a switch and a port that a data flow between two stations, the source and destination stations, goes through in a domain is identified. More concretely, first the statistical information conversion unit 150 searches for stations belonging to a domain boundary based on the source and destination stations identified in (2-1). Here, note that the stations belonging to a domain boundary represent station statistical information related to the ports of switches registered in the domain boundary management unit 111 and include not only stations in the OpenFlow domains, but also MAC addresses registered in the MAC address table of the Legacy domains.
   Next, the statistical information conversion unit 150 identifies a switch and a port in each domain that a data flow passes through. At this time, when a data flow goes through an OpenFlow domain, a switch and a port that it passes through can be identified by piecing together the information of flow entries set in the OpenFlow switches. Further, when a data flow goes through a Legacy domain, a switch and a port that it passes through can be identified by searching MAC address tables of switches in a domain using the MAC address of the source station as a key. In either case, when unable to continue acquiring the information, the statistical information conversion unit 150 presents that the information of a switch and a port to be passed through thereafter in a domain is not available ("N/A").
(2-3) The data flow statistics are converted into statistical information of the number of transmitted packets in each domain including the domain, identified in (2-2), that a data flow passes through, and the result is presented. More concretely, the statistical information conversion unit 150 presents the number of transmitted packets in the data flow statistics for each domain. When the domain that a data flow passes through is an OpenFlow domain, the number of transmitted packets (TX) obtained from the acquired data flow statistics is presented, and when it is a Legacy domain, "N/A" is presented.

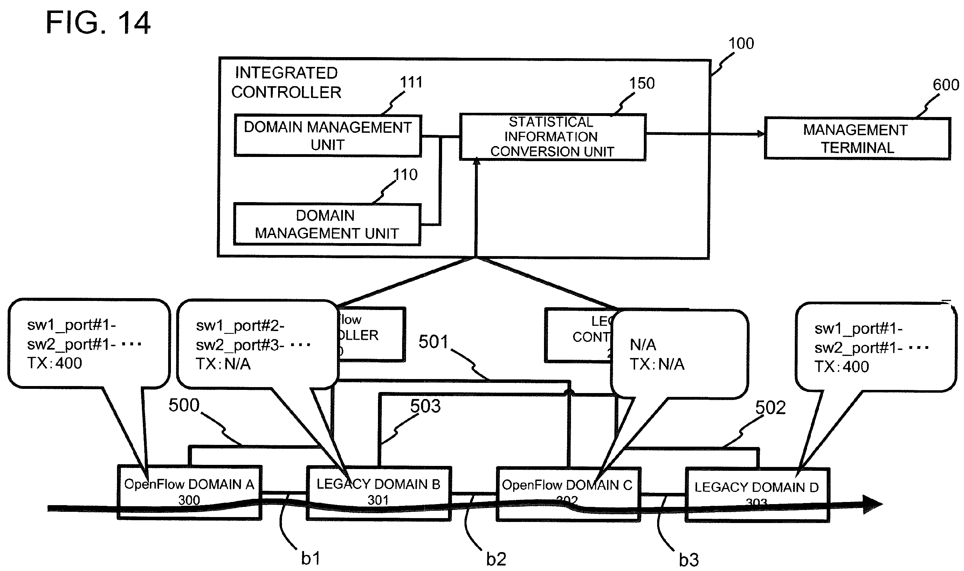

As described, data flow statistics can be expanded into information of the entire network managed by the integrated controller, as shown in Fig. 14.

### [Exemplary Embodiment 3]

Next, a third exemplary embodiment configured identically to the first exemplary embodiment and capable of converting port statistics will be described. Since the basic configuration is the same as the first exemplary embodiment, the differences therebetween will be mainly described.

Port statistics are statistical information of the number of packets transmitted/received by a port. The port statistics are statistical information that can be acquired by a Legacy switch, however, the statistical information conversion unit 150 of the integrated controller 100 of the present exemplary embodiment presents the number of packets transmitted/received within a domain and the number of packets transmitted/received between domains utilizing station statistics.

More concretely, the statistical information conversion unit 150 first acquires port statistics of switches belonging to the domains B and D, which are Legacy domains, via the Legacy controller 201 in Fig. 3.

Next, the statistical information conversion unit 150 identifies stations connected to the port and acquires the MAC address of each station.

Next, the statistical information conversion unit 150 searches station statistics belonging to a domain boundary of a domain reachable from a domain to which the port having the port statistics acquired belongs using the acquired MAC addresses of the stations. For instance, if the switch having the port statistics acquired belongs to the domain B, the statistical information conversion unit 150 searches the station statistics belonging to a domain boundary of the domains (for instance the domains A and C) reachable from the domain B.

For instance, when port statistics are acquired in the domain B, domains reachable from the domain B are sequentially traced from the domain C reachable from the domain B to the domain D reachable from the domain C, etc., and the statistics of stations having the same MAC address are acquired for each domain boundary.

When station statistics can be acquired for each domain boundary as described, the statistical information conversion unit 150 can present the number of packets processed in a particular domain out of the number of packets transmitted/received by a port having the port statistics acquired by calculating the difference between the acquired station statistics.

As described, according to the present exemplary embodiment, it becomes possible to provide statistical information that includes not only mere port statistics, but also the number of packets transmitted/received between a port and other domains.

The exemplary embodiments of the present invention have been described, however, the present invention is not limited to these exemplary embodiments and further modifications, substitutions, and adjustments can be performed within the scope of the basic technological concept of the present invention. For instance, the network configurations and the configuration of the elements shown in the drawings are examples for a better understanding of the present invention, which is not limited to the configurations shown in the drawings.

Further, MAC addresses are used as the unit for acquiring statistical information in the exemplary embodiments above, however, key information can be created by combining a domain ID, switch ID, port ID, VLAN ID, etc. Further, information that corresponds to Match Fields of flow entries set in each OpenFlow switch for identifying a flow in Non-Patent Literatures 1 and 2 can be used as key information as well.

Finally, preferred modes of the present invention will be summarized.

### (Mode 1)

Refer to the network statistical information providing system according to the first aspect.

### (Mode 2)

The network statistical information providing system according to mode 1, wherein
the statistical information acquirable from the first domain includes station statistical information that indicates an amount of communication for each MAC address observed by a switch belonging to the first domain, and
the statistical information conversion unit generates a first table in which the statistical information of a station(s) that does not belong to the domain boundary and the information of a station identified from a MAC address table of an edge switch in the second domain are stored and a second table in which an entry having a same MAC address as a station appearing in the first table is extracted from the classified statistical information of a station(s) that belongs to the domain boundary.

### (Mode 3)

The network statistical information providing system according to mode 1 or 2, wherein
the statistical information acquirable from the first domain includes flow statistical information that indicates a path and an amount of communication between two MAC addresses observed by a switch, and the statistical information conversion unit generates statistical information of each domain on the path between the two MAC addresses based on the flow statistical information

### (Mode 4)

The network statistical information providing system according to mode 3, wherein
the statistical information conversion unit identifies the path between the two MAC addresses using control information for forwarding a packet(s) set in a switch in the first domain and a MAC address table set in a switch in the second domain.

### (Mode 5)

The network statistical information providing system according to any one of modes 1 to 4, wherein
the statistical information conversion unit acquires as the statistical information port statistics acquired from the second domain, acquires station statistics of a MAC address(es), for which the port statistic has been acquired, from the first domain, and puts together and provides the port statistics and the station statistics.

### (Mode 6)

The network statistical information providing system according to any one of claims 1 to 5, comprising:
a first controller that manages the first domain;
a second controller that manages the second domain; and an integrated controller that controls the first and second controllers.

### (Mode 7)

The network statistical information providing system according to any one of modes 1 to 6, wherein
the first domain includes a switch group controlled by a control apparatus of a centralized control network, and
the second domain includes a switch group not controlled by the control apparatus.

### (Mode 8)

The network statistical information providing method according to the second aspect.

### (Mode 9)

The program according to the third aspect.

Further, Modes 8 and 9 can be developed into Modes 2 to 7 as Mode 1.

Further, the disclosure of each Patent Literature and Non-Patent Literature cited above is incorporated herein in its entirety by reference thereto. It should be noted that other objects, features and aspects of the present invention will become apparent in the entire disclosure and that modifications may be done without departing the gist and scope of the present invention as disclosed herein and claimed as appended herewith. Also it should be noted that any combination of the disclosed and/or claimed elements, matters and/or items may fall under the modifications aforementioned. Particularly, the ranges of the numerical values used in the present description should be interpreted as a specific numeric value or small range included in the ranges even in cases where it is not stated so.

### REFERENCE SIGNS LIST

- 10:: network statistical information providing system
- 11, 111:: domain boundary management unit
- 12, 150:: statistical information conversion unit
- 31:: first domain
- 32:: second domain
- 33:: third domain
- 100:: integrated controller
- 110:: domain management unit
- 200:: OpenFlow controller
- 201:: Legacy controller
- 300 to 303:: domain
- 500 to 503:: control channel
- 600:: management terminal
- b1 to b3:: domain boundary

## Claims

1. A network statistical information providing system, comprising:
a domain boundary management unit that manages link information between a first domain configured to include a device capable of acquiring statistical information having a predetermined granularity and a second domain that does not include a device capable of acquiring statistical information having the predetermined granularity; and
a statistical information conversion unit that classifies statistical information acquired from the first domain into statistical information that does not belong to a domain boundary and statistical information that belongs to the domain boundary using the link information, performs predetermined processing on the statistical information that belongs to the domain boundary, and provides the processed statistical information as statistical information straddling a plurality of domains.

2. The network statistical information providing system according to claim 1, wherein
the statistical information acquirable from the first domain includes station statistical information that indicates an amount of communication for each MAC address observed by a switch belonging to the first domain, and
the statistical information conversion unit generates a first table in which the statistical information of a station(s) that does not belong to the domain boundary and the information of a station identified from a MAC address table of an edge switch in the second domain are stored and a second table in which an entry having a same MAC address as a station appearing in the first table is extracted from the classified statistical information of a station(s) that belongs to the domain boundary.

3. The network statistical information providing system according to claim 1 or 2, wherein
the statistical information acquirable from the first domain includes flow statistical information that indicates a path and an amount of communication between two MAC addresses observed by a switch, and
the statistical information conversion unit generates statistical information of each domain on the path between the two MAC addresses based on the flow statistical information.

4. The network statistical information providing system according to claim 3, wherein
the statistical information conversion unit identifies the path between the two MAC addresses using control information for forwarding a packet(s) set in a switch in the first domain and a MAC address table set in a switch in the second domain.

5. The network statistical information providing system according to any one of claims 1 to 4, wherein
the statistical information conversion unit acquires as the statistical information port statistics acquired from the second domain, acquires station statistics of a MAC address(es), for which the port statistic has been acquired, from the first domain, and puts together and provides the port statistics and the station statistics.

6. The network statistical information providing system according to any one of claims 1 to 5, comprising:
a first controller that manages the first domain;
a second controller that manages the second domain; and
an integrated controller that controls the first and second controllers.

7. The network statistical information providing system according to any one of claims 1 to 6, wherein
the first domain includes a switch group controlled by a control apparatus of a centralized control network, and
the second domain includes a switch group not controlled by the control apparatus.

8. A network statistical information providing method, comprising:
by a computer that comprises a domain boundary management unit that manages link information between a first domain configured to include a device capable of acquiring statistical information having a predetermined granularity and a second domain that does not include a device capable of acquiring statistical information having the predetermined granularity, classifying statistical information acquired from the first domain into statistical information that does not belong to a domain boundary and statistical information that belongs to the domain boundary using the link information; and
performing predetermined processing on the statistical information that belongs to a domain boundary and providing the processed statistical information as statistical information straddling a plurality of domains.

9. The network statistical information providing method according to claim 8, wherein
the statistical information acquirable from the first domain includes the station statistical information that indicates an amount of communication for each MAC address observed by a switch belonging to the first domain, and
the method comprises, by the computer, generating a first table in which statistical information of a station(s) that does not belong to the domain boundary and the information of a station identified from a MAC address table of an edge switch in the second domain are stored and a second table in which an entry having a same MAC address as a station appearing in the first table is extracted from the classified statistical information of a station(s) that belongs to the domain boundary.

10. The network statistical information providing method according to claim 8 or 9, wherein
the statistical information acquirable from the first domain includes flow statistical information that indicates a path and an amount of communication between two MAC addresses observed by a switch, and
the method comprises by the computer, generating statistical information of each domain on the path between the two MAC addresses based on the flow statistical information.

11. The network statistical information providing method according to claim 10, comprising:
by the computer, identifying the path between the two MAC addresses using control information for forwarding a packet(s) set in a switch in the first domain and a MAC address table set in a switch in the second domain.

12. The network statistical information providing method according to any one of claims 8 to 11, comprising:
by the computer, acquiring as the statistical information port statistics acquired from the second domain and acquiring station statistics of a MAC address(es), for which the port statistic has been acquired, from the first domain; and
putting together and providing the port statistics and the station statistics.

13. A program causing a computer that comprises a domain boundary management unit that manages link information between a first domain configured to include a device capable of acquiring statistical information having a predetermined granularity and a second domain that does not include a device capable of acquiring statistical information having the predetermined granularity to execute:
classifying statistical information acquired from the first domain into statistical information that does not belong to a domain boundary and statistical information that belongs to the domain boundary using the link information; and
performing predetermined processing on the statistical information that belongs to a domain boundary and providing the processed statistical information as statistical information straddling a plurality of domains.

14. The program according to claim 13, wherein
the statistical information acquirable from the first domain includes the station statistical information that indicates an amount of communication for each MAC address observed by a switch belonging to the first domain, and
the program causes the computer to execute generating a first table in which statistical information of a station(s) that does not belong to the domain boundary and the information of a station identified from a MAC address table of an edge switch in the second domain are stored and a second table in which an entry having a same MAC address as a station appearing in the first table is extracted from the classified statistical information of a station(s) that belongs to the domain boundary.

15. The program according to claim 13 or 14, wherein
the statistical information acquirable from the first domain includes flow statistical information that indicates a path and an amount of communication between two MAC addresses observed by a switch, and
the program causes the computer to execute generating statistical information of each domain on the path between the two MAC addresses based on the flow statistical information.

16. The program according to claim 15, causing the computer to execute:
identifying the path between the two MAC addresses using control information for forwarding a packet(s) set in a switch in the first domain and a MAC address table set in a switch in the second domain.

17. The program according to any one of claims 13 to 16, causing the computer to execute:
acquiring as the statistical information port statistics acquired from the second domain and acquiring station statistics of a MAC address(es), for which the port statistic has been acquired, from the first domain; and
putting together and providing the port statistics and the station statistics.
